# EUROPEAN PATENT APPLICATION

(11) **EP 1 038 897 A2**
(43) Date of publication of application: **27.09.2000**
(21) Application number: 00106138.1
(22) Date of filing: 21.03.2000
(51) Int. Cl.: C08G 18/38, C09D 175/02

(54) **Polyaspartic esters containing additional isocyanate-reactive functionality for spray polyurea coatings**

(30) Priority: 23.03.1999 US 274920
(71) Applicant: AIR PRODUCTS AND CHEMICALS, INC., Allentown, PA 18195-1501 (US)
(72) Inventor: Dickenson, John Bartram, North Wales, PA 19454 (US)
(74) Representative: Kador & Partner

(57) **Abstract**

A method for preparing a polyurea coating which comprises preparing a coating composition comprising a polyisocyanate component and an isocyanate-reactive component, coating a substrate with the coating composition and curing the coating composition at a temperature of less than 100°C, characterized in that the isocyanate-reactive component comprises the reaction product of a diester of maleic acid or fumaric acid with a polyamine component, the polyamine component comprising a polyamine having 2 primary amino groups and at least one other functional group which is reactive towards isocyanate at temperatures of less than 100°C, the diester and polyamine component reacted in ratio of <1 mole of diester per equivalent of isocyanate reactive group to afford a reaction product having at least 10 equivalent % of unreacted isocyanate-reactive groups.

## Description

### BACKGROUND OF THE INVENTION

The present invention relates to polyamines containing secondary amino groups resulting from the reaction of primary amino groups of the polyamines with maleic or fumaric diesters and their use as amine chain extenders for polyurea coating compositions, especially spray polyurea compositions.

There is considerable published literature on the topic of polyurea elastomers. See U.S 5,162,388.

Spray polyurea systems are based on two-component technology involving an isocyanate semi-prepolymer and an amine co-reactant, often an amine resin blend. Typically, these systems comprise an isocyanate component, also known as the iso or A side and an amine component, also known as the resin or B side. A typical A side is a mixture of a 4,4'-diphenylmethane diisocyanate (MDI) semi-prepolymer, monomeric MDI, and optionally propylene carbonate as a diluent. A typical B side comprises a mixture of one or more poly(oxypropylene) diamines or triamines, one or more amine chain extenders, and optionally pigments, fillers, and other additives.

The principal chain extender used in spray polyurea coatings is diethyltoluene-diamine (DETDA). However, DETDA suffers from several disadvantages: (1) it is too reactive towards isocyanates, giving in a typical formulation a gel time of about 3 to 4 seconds, and (2) it has been found to cause cancer in laboratory animals. In particular, systems with gel times shorter than 4 seconds exhibit poor flow and leveling and poor adhesion to unprimed concrete. Systems with gel times greater than about 20 seconds do not allow a facility, e.g., a floor, to be put into service as quickly as desired by users of spray polyurea coating technology.

To overcome the reactivity problem with DETDA, it is common practice in the industry to replace at least a part of the chain extender with an auxiliary chain extender, such as N,N'-bis(sec-butyl)methylene dianiline. Using a suitable combination of DETDA and the dianiline derivative allows the formulator to achieve a suitable gel time. However, the introduction of the dianiline derivative results in the following concerns: (1) significantly higher system cost, and (2) reduced physical properties and chemical resistance of the cured elastomeric coating. This reduction in physical properties and chemical resistance may be due to the fact that the dianiline derivative is a di-secondary amine versus DETDA, which is a di-primary amine. Secondary amines react with isocyanates to form a trisubstituted urea, which may not be able to form hydrogen bonds to the same extent as a di-substituted urea formed by the reaction of a primary amine with an isocyanate. Hydrogen bonding is believed to contribute to the excellent physical properties and chemical resistance of typical spray polyurea coatings.

U.S. 5,126,170 and U.S. 5,236,741 disclose a process for the preparation of a polyurethane coating by coating the substrate with a coating composition containing a polyisocyanate component and an isocyanate-reactive component containing at least one compound corresponding to a polyaspartic acid derivative and curing the coating composition to a temperature of 100°C or less.

U.S. 5,442,034 discloses spray polyurea elastomers made from an (A) component and a (B) component, where the (A) component comprises a quasi-prepolymer made from an isocyanate and an active hydrogen-containing material, such as a polyoxyalkylene polyamine. The (B) component includes an amine resin, such as an amine-terminated polyoxyalkylene polyamine which may be the same or different from the polyoxyalkylene polyamine of the quasi-prepolymer. The viscosity of the (A) component is reduced by the inclusion of an organic, alkylene carbonate.

U.S. 3,639,418 discloses carboxylic acid esters containing hydantoin groups which can be prepared by reacting an ethylene-1,2-carboxylic acid diester with a primary polyamine to yield an amino succinic acid group containing intermediate, further reacting the intermediate with a monoisocyanate and cyclizing the resulting reacted intermediate immediately or subsequently.

### SUMMARY OF THE INVENTION

The present invention is directed to a process for the preparation of a polyurea coating by coating a substrate with a coating composition comprising
(a) a polyisocyanate component and
(b) an isocyanate-reactive component containing at least one compound which is the reaction product of a diester of maleic acid or fumaric acid with a polyamine component, the polyamine component comprising a polyamine having 2 primary amino groups and at least one other functional group which is reactive towards isocyanate at temperatures of less than 100°C, the diester and polyamine component reacted in ratio of <1 mole of diester per equivalent of isocyanate reactive group to afford a reaction product having at least 10 equivalent percent (eq%) of free, i.e., unreacted, isocyanate-reactive groups, the functional isocyanate-reactive groups comprising a primary aliphatic or aromatic amine, a secondary aliphatic or aromatic amine which is not an aspartic ester, or a primary, secondary, or tertiary alcohol,
and curing the coating composition at a temperature of 100°C or less.

As another embodiment, the invention provides a spray polyurea elastomer made by reacting together (a) a polyisocyanate component and (b) an isocyanate-reactive component containing at least one compound which is the reaction product of a diester of maleic acid or fumaric acid with a polyamine component, the polyamine component comprising a polyamine having 2 primary amino groups and at least one other functional group which is reactive towards isocyanate at temperatures of less than 100°C, the diester and polyamine component reacted in ratio of <1 mole of diester per equivalent of isocyanate reactive group to afford a reaction product having at least 10 eq% of free, i.e., unreacted, isocyanate-reactive groups, the functional isocyanate-reactive groups comprising a primary aliphatic or aromatic amine, a secondary aliphatic or aromatic amine which is not an aspartic ester, or a primary, secondary, or tertiary alcohol, and combining the components (a) and (b) through a spray gun.

As yet another embodiment of the invention there is provided an isocyanate-reactive composition containing at least one compound which is the reaction product of a diester of maleic acid or fumaric acid with a polyamine component, the polyamine component comprising a polyamine having 2 primary amino groups and at least one other functional group which is reactive towards isocyanate at temperatures of less than 100°C, the diester and polyamine component reacted in ratio of <1 mole of diester per equivalent of isocyanate reactive group to afford a reaction product having at least 10 eq% of free isocyanate-reactive groups, the functional isocyanate-reactive groups comprising a primary aliphatic or aromatic amine, a secondary aliphatic or aromatic amine which is not an aspartic ester, or a primary, secondary, or tertiary alcohol.

As an advantage of the present invention, there is provided an amine chain extender for polyurea coatings with suitable reactivity and acceptable toxicology. The amine chain extenders, when formulated into a spray polyurea coating, give suitable gel times of greater than 5 seconds and less than 20 seconds.

### DETAILED DESCRIPTION OF THE INVENTION

Suitable polyisocyanates for use as the polyisocyanate component (a) in accordance with the present invention include the known polyisocyanates of polyurethane and polyurea chemistry, including, for example, hexamethylene diisocyanate, phenylene diisocyanate, toluene diisocyanate (TDI), and 4,4'-diphenylmethane diisocyanate (MDI). Especially suitable are the 2,4- and 2,6-TDIs individually or together as they are commercially available mixtures. Other suitable isocyanates are mixtures of diisocyanates known commercially as "crude MDI", also known as PAPI, which contain about 60% of 4,4'-diphenylmethane diisocyanate, along with other isomeric and analogous higher polyisocyanates.

It is preferred, however, to use derivatives of these monomeric polyisocyanates, as is conventional in coatings technology. These derivatives include polyisocyanates containing biuret groups, polyisocyanates containing isocyanurate groups, polyisocyanates containing urethane groups, polyisocyanates containing carbodiimide groups, and polyisocyanates containing allophanate groups. See U.S. 5,126,170 with citations to patent literature regarding such derivatives of monomeric polyisocyanates.

Also suitable are "prepolymers" of these polyisocyanates comprising a partially prereacted mixture of a polyisocyanate and a polyether or polyester polyol. Isocyanate group-containing prepolymers and semi-prepolymers, also called quasi-prepolymers, based on the monomeric simple or modified polyisocyanates exemplified above and polyols are preferred for use as polyisocyanate component (a). These prepolymers and semi-prepolymers generally have an isocyanate content of about 0.5 to 30% by weight, preferably about 1 to 20% by weight, and are prepared in known manner by the reaction of the above-mentioned starting materials at an NCO/OH equivalent ratio of about 1.05:1 to 10:1, preferably about 1.1:1 to 3:1 for "normal" prepolymers and 6:1 to 10:1 for semi-prepolymers. For "normal" prepolymers this reaction is usually followed by distillation removal of any unreacted volatile starting polyisocyanate while for semi-prepolymers the products are not distilled and typically contain large amounts of unreacted starting polyisocyanate.

The prepolymers and semi-prepolymers may suitably be prepared from low molecular weight polyols having a molecular weight of 62 to 299, such as ethylene glycol, propylene glycol, trimethylol propane, 1,6-dihydroxyhexane; low molecular weight, hydroxyl-containing esters of these polyols with dicarboxylic acids of the type exemplified hereinafter; low molecular weight ethoxylation and/or propoxylation products of these polyols; and mixtures of the preceding polyvalent modified or unmodified alcohols.

The prepolymers and semi-prepolymers are, however, preferably prepared from the known, relatively high molecular weight polyhydroxyl compounds, or polyols, of polyurethane chemistry which have a molecular weight of 300 to about 8000, preferably about 1000 to 5000, as determined from the functionality and the OH number. These polyhydroxyl compounds have at least two hydroxyl groups per molecule and generally have a hydroxyl group content of about 0.5 to 17% by weight, preferably about 1 to 5% by weight.

Examples of suitable, relatively high molecular weight polyhydroxyl compounds which may be used for the preparation of the prepolymers and semi-prepolymers include the polyester polyols based on the previously described low molecular weight monomeric polyols and polycarboxylic acids such as adipic acid, sebacic acid, phthalic acid, isophthalic acid, tetrahydrophthalic acid, hexahydrophthalic acid, maleic acid, the anhydrides of these acids and mixtures of these acids and/or acid anhydrides. Hydroxyl group-containing polylactones, especially poly-ε-caprolactones, are also suitable for the preparation of prepolymers and semi-prepolymers.

Polyether polyols, which are obtained in known manner by the alkoxylation of suitable starting molecules, are also suitable for the preparation of the isocyanate group-containing prepolymers and semi-prepolymers. Examples of suitable starting molecules for the polyether polyols include the previously described monomeric polyols, water, organic polyamines having at least two NH bonds and any mixtures of these starting molecules. Ethylene oxide and/or propylene oxide are particularly suitable alkylene oxides for the alkoxylation reaction. These alkylene oxides may be introduced into the alkoxylation reaction in any sequence or as a mixture.

Also suitable for the preparation of the prepolymers and semi-prepolymers are the hydroxyl group-containing polycarbonates which may be prepared by the reaction of the previously described monomeric diols with phosgene and diaryl carbonates, such as diphenyl carbonate.

Component (b) is based in whole or in part on the reaction product of a diester of maleic acid or fumaric acid, i.e., a maleate or fumarate diester, with a polyamine component which comprises a polyamine having 2 primary amino groups and at least one other functional group which is reactive towards isocyanate at temperatures of less than 100°C, the functional isocyanate-reactive group being a primary aliphatic or aromatic amine, a secondary aliphatic or aromatic amine which is not an aspartic ester, or a primary, secondary, or tertiary alcohol. The diester and polyamine component are reacted in a ratio of <1 mole of diester per equivalent of isocyanate reactive groups in the polyamine component, preferably 0.1-0.9 moles, most preferably 0.5-0.75 moles, diester per eq of isocyanate reactive group, to afford a reaction product having at least 10 eq%, preferably 10-90 eq%, and most preferably 25-50 eq%, of free isocyanate-reactive group.

The reaction product will comprise at least one compound corresponding to formula I, i.e., a polyaspartic acid derivative: 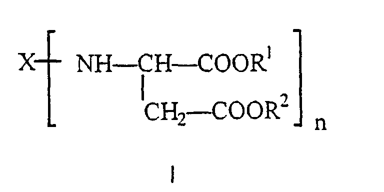 wherein X represents an organic group derived from a compound having n primary amino groups and containing at least one functionality which is reactive towards isocyanate groups at a temperature of 100°C or less, R¹ and R² may be identical or different and represent organic groups which are inert towards isocyanate groups at a temperature of 100°C or less, especially C1-C4 alkyl groups, and n represents an integer with a value of at least 2, preferably 2 or 3.

Polyaspartic acid derivatives corresponding to the above formula include those wherein X represents a divalent hydrocarbon group obtained by the removal of the amino groups from polyamines containing at least three amino nitrogens, two of which are primary amines such as diethylenetriamine and triethylenetetramine. X may also represent a divalent hydrocarbon group obtained by the removal of the two primary amino groups from polyamines containing at least two primary amines, and at least one hydroxyl functionality which may be a primary, secondary, or tertiary hydroxyl group, such as N,N-bis(aminopropyl) monoethanolamine. These polyaspartic acid derivatives are prepared in known manner by reacting the primary polyamines corresponding to the formula II

X-(̵NH₂)ₙ II

with a maleic or fumaric acid diester corresponding to the formula III

R¹OOC―CH=CH―COOR² III

It is also possible to use a mixture of two or more polyamines according to formula II or a mixture of one or more of such polyamines with diamines such as ethylenediamine, 1,2-propanediamine, 1,4-butanediamine, 1,6-hexanediamine, 2,5-dimethylhexane, 2,2,4- and/or 2,4,4-trimethyl-1,6-hexanediamine, 1,11-undecanediamine, 1,12-dodecanediamine, 1-amino-3,3,5-trimethyl-5-aminomethylcyclohexane, 2,4- and/or 2,6-hexahydrotoluenediamine, 2,4' and/or 4,4'-dicyclohexylmethanediamine, and 3,3'-dimethyl-4,4'-dicyclohexylmethanediamine. Aromatic polyamines such as 2,4- and/or 2,6-toluenediamine and 2,4'- and/or 4,4'-diphenylmethanediamine are also suitable, but less preferred. Relatively high molecular weight polyether polyamines containing an aliphatically bound primary amino groups, for example, products marketed under the Jeffamine trademark by Huntsman are also suitable.

An especially suitable mixture of polyamines for reaction with the maleate or fumarate diester is ANCAMINE® 2168 curing agent which comprises the following components:

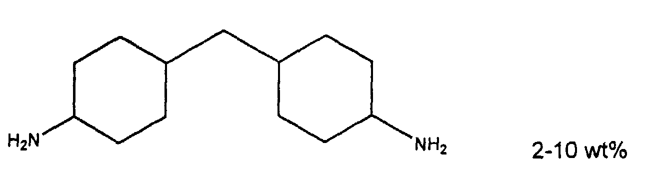

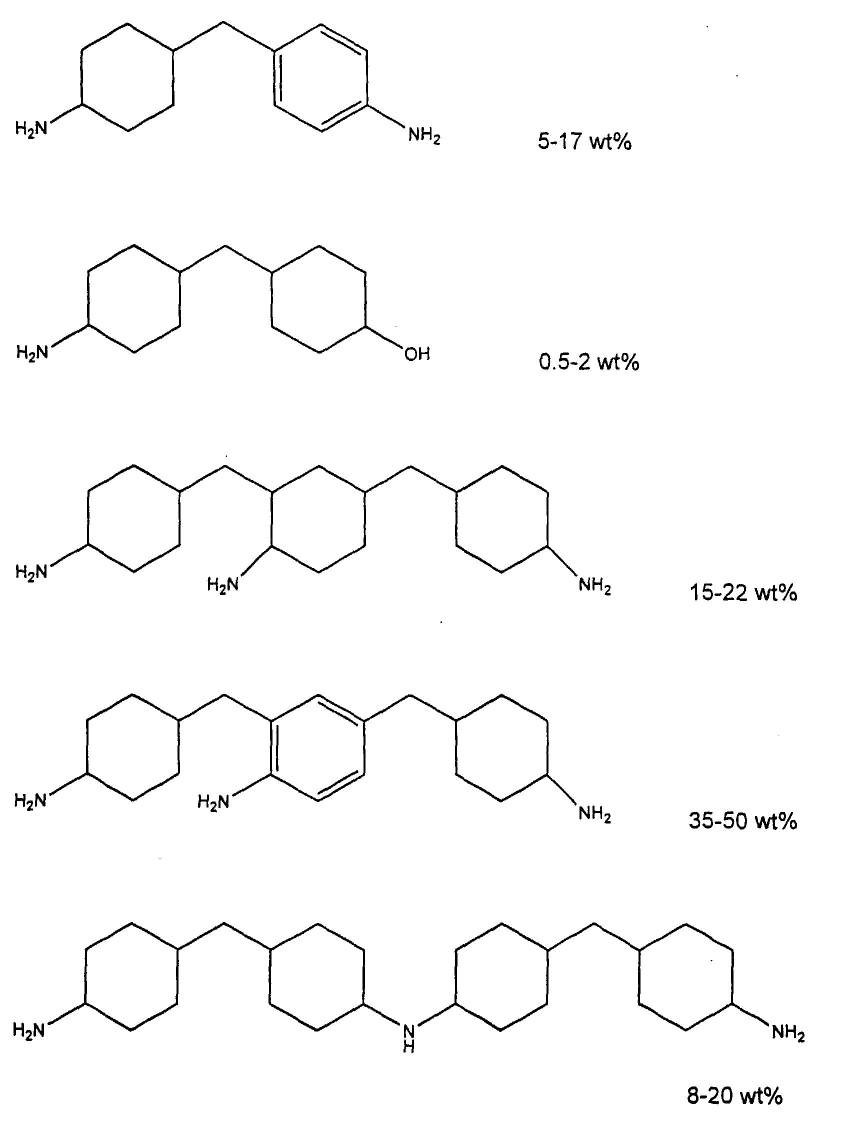

It is also desirable to use as the polyamine component any one of the above three triamino-containing compounds or any combination thereof.

The only requirement for using mixtures of polyamines as the polyamine component is that the mixture has a primary amino functionality of at least 2 and an overall isocyanate-reactive group functionality of >2 so that when reacted in a ratio of <1 mole of diester per equivalent of isocyanate reactive groups in the polyamine component a reaction product is provided having at least 10 eq% of free, unreacted isocyanate-reactive groups.

Examples of maleic or fumaric acid diesters suitable for use in the preparation of the compounds include dimethyl, diethyl, and di-n-butyl esters of maleic and fumaric acid.

The preparation of the "polyaspartic acid derivative reaction products" from the above-mentioned starting materials may be carried out, for example, at a temperature of 0 to 100°C using the starting materials in such proportions that less than 1, preferably, less than 0.9, olefinic double bond is present for each isocyanate reactive group. Excess starting materials may be removed by distillation after the reaction. The reaction may be carried out solvent-free or in the presence of suitable solvents such as methanol, ethanol, propanol, dioxane, and mixtures of such solvents.

The binders present in the coating compositions according to the invention are based on mixtures of polyisocyanate component (a) with the isocyanate reactive component (b) containing secondary polyamine reaction products corresponding to formula I or mixtures of polyisocyanate component (a) with the isocyanate reactive component (b) containing secondary polyamine reaction products and other isocyanate-reactive compounds.

These other optionally used isocyanate-reactive compounds may be amine resins such as polyoxypropyleneamines, or organic polyhydroxyl compounds known from polyurethane chemistry and include both the low molecular weight polyols and the relatively high molecular weight polyols previously set forth for the preparation of the prepolymers and semi-prepolymers. When polyhydroxyl compounds are included, the products are polyurethane/ureas. Preferably, polyoxypropyleneamines are used.

In the binders used according to the invention, components (a) and (b) are used in amounts sufficient to provide an equivalents ratio of isocyanate groups to isocyanate-reactive groups of about 0.8:1 to 20:1, preferably about 0.8:1 to 2:1, more preferably about 0.8:1 to 1.2:1, and most preferably about 1.1:1. The optional polyhydroxy compound may be present in component (b) in an amount such that up to 20 hydroxyl groups are present for each secondary amino group from the compounds corresponding to formula I, preferably, the equivalents ratio of hydroxyl groups to secondary amino groups is about 10:1 to 1:10.

The coating compositions are prepared by mixing the individual components together, although if present the optional polyols may be initially blended with the compounds corresponding to formula I. Preparation of the coating compositions is carried out solvent-free or in the presence of solvents conventionally used in the polyurea coatings. It is an advantage of the process according to the invention that the quantity of solvent used may be greatly reduced when compared with that required in known two component systems.

Examples of suitable solvents include xylene, butyl acetate, methylisobutyl ketone, methoxypropyl acetate, N-methylpyrrolidone, petroleum hydrocarbons, isobutanol, butylglycol, chlorobenzenes, and mixtures of such solvents. The alcoholic solvents previously mentioned may be used provided that the optional polyols are not used.

In the coatings compositions, the weight ratio of the total quantity of components (a) and (b) to the quantity of solvent is about 40:60 to 100:0, preferably, about 60:40 to 90:10.

The coating compositions may also contain other auxiliary agents and additives conventionally used in polyurea coatings, in particular, pigments, fillers, leveling agents, catalysts, anti-settling agents, and the like.

The properties of the coatings obtained according to the invention may be adjusted in particular by suitable choice of the nature and proportions of starting components (a) and (b). Thus, for example, the presence of relatively high molecular weight linear polyols, either in the prepolymers or semi-prepolymers of component (a) and/or in component (b), increases the elasticity of the coating, whereas, the absence of such starting components increases the crosslinking density and hardness of the resulting coatings.

Component (a) and component (b) of the present spray polyurea coating system are combined or mixed under high pressure; most preferably, they are impingement mixed directly in the high pressure spray equipment. In particular, a first and second pressurized stream of components (a) and (b), respectively, are delivered from two separate chambers of the proportioner and are impacted or impinged upon each other at high velocity to effectuate an intimate mixing of the two components and, thus, the formulation of the elastomer system, which is then coated onto the desired substrate via the spray gun.

For carrying out the process according to the invention, the coating compositions are applied as one or more layers to substrates by known methods such as brush coating, immersion or flooding, by means of rollers or doctor applicators, or especially by spraying. The process is suitable for the formation of coatings on any substrates, for example, metals, plastics, wood, glass, or especially concrete.

After the substrates have been coated, the coatings are cured at a temperature of about -20°C to 100°C. Curing is preferably carried out at a temperature of about 10°C to 80°C by air drying or forced drying.

### Example 1

1776 g (15.86 eq) of mixed polycycloaliphatic amines (MPCA; Ancamine 2168 curing agent) were heated to 60°C and charged to a 5L, 4-neck, round-bottom flask equipped with a heating mantle, overhead condenser, and addition funnel. A nitrogen blanket was maintained over the MPCA. Over a one-hour period, 1975.8 g (11.49 moles) of diethyl maleate was added in eight increments of approximately 250g each. The reaction mixture exothermed to 82-83°C, was held at 60° for 6 hours and then allowed to stand over the weekend. In this case sufficient diethyl maleate was added to react with 72.4 eq% of the available isocyanate reactive groups.

The viscosity of the MPCA polyaspartic ester (MPCA/PAE) was measured as a function of time to determine when the reaction was complete, as shown in the following table.

| **Days** | **Viscosity (cps)** |
|---|---|
| 4 | 2,600 |
| 6 | 12,600 |
| 10 | 13,500 |
| 14 | 15,100 |
| 33 | 20,200 |
| 45 | 22,600 |

### Example 2

The reductive reaction product of meta-xylylenediamine and methylisobutyl ketone (MXDA/MIBK) was prepared essentially according to the Example in US 3,596,782.

### Example 3

This example shows the preparation of spray polyurea coatings using a Gusmer spray gun apparatus. The components were used in parts by weight. Run A is a standard prior art system and Run B is according to the invention.

| | Run A | Run B |
|---|---|---|
| ISOCYANATE SIDE A | | |
| Rubinate 9272 | 60 | 60 |
| Mondur ML | 30 | 30 |
| Propylene Carbonate | 10 | 10 |
| Eq Wt | 283.4 | 283.4 |
| | | |

| ISOCYANATE-REACTIVE SIDE B | | |
|---|---|---|
| Jeffamine D-2000 | 48.8 | 38.3 |
| Jeffamine T-5000 | 5 | |
| DETDA | 19 | |
| Unilink 4200 | 10 | |
| MPCA/PAE-MXDA/MIBK (70/30 wt/wt) | | 44.5 |
| Epoxy Silane | 0.8 | 0.8 |
| Gray grind | 16.4 | |
| Light gray grind | | 16.4 |
| | | |
| ISO/AMINE WT RATIO | 1.00 | 1.00 |
| ISO INDEX | 1.13 | 1.51 |
| | | |
| Gel Time (sec) | 8 | 13 |

The materials use were the following:
Rubinate 9272 MDI-PPG2000 quasi-prepolymer from ICI.
Mondur ML MDI uretonimine from Bayer.
Jeffamine D2000 polyoxypropylene diamine from Huntsman.
Jeffamine T5000 polyoxypropylene triamine from Huntsman.
Epoxy Silane from Dow Corning.
Unilink 4200 N,N'-di(sec-butyl) methylenedianiline from UOP, Inc.
The gray grind and light gray grind pigments were suspended in the D2000.

The data in Table 1 shows that the chain extenders are effective for producing polyurea spray coatings with suitable gel times without the use of aromatic diamines such as diethyltoluenediamine or dialkylmethylenedianiline.

### STATEMENT OF INDUSTRIAL APPLICATION

The present invention provides an amine chain extender especially suitable for spray polyurea coating compositions.

## Claims

1. In a method for preparing a polyurea coating which comprises preparing a coating composition comprising a polyisocyanate component and an isocyanate-reactive component, coating a substrate with the coating composition and curing the coating composition at a temperature of less than 100°C, the improvement which comprises the isocyanate-reactive component comprising the reaction product of a diester of maleic acid or fumaric acid with a polyamine component, the polyamine component comprising a polyamine having 2 primary amino groups and at least one other functional group which is reactive towards isocyanate at temperatures of less than 100°C, the diester and polyamine component reacted in ratio of <1 mole of diester per equivalent of total isocyanate reactive groups to afford a reaction product having at least 10 equivalent % of free isocyanate-reactive group, the functional isocyanate-reactive group being a primary aliphatic or aromatic amine, a secondary aliphatic or aromatic amine which is not an aspartic ester, or a primary, secondary, or tertiary alcohol.

2. The method of Claim 1 in which the polyisocyanate component is a polyisocyanate prepolymer or semi-prepolymer.

3. The method of Claim 1 in which the diester and polyamine component are reacted in a ratio of 0.1-0.9 moles diester per equivalent of isocyanate reactive group.

4. The method of Claim 1 in which the reaction product has 25-50 eq% of free isocyanate-reactive groups.

5. The method of Claim 1 in which in which the reaction product comprises at least one polyaspartic acid derivative of the structure 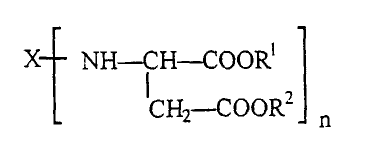 wherein X represents an organic group derived from a compound having n primary amino groups and containing at least one other functionality which is reactive towards isocyanate groups at a temperature of 100°C or less, R¹ and R² may be identical or different and represent C1-C4 alkyl groups, and n represents an integer with a value of at least 2.

6. The method of Claim 5 in which the polyamine component comprises at least one of the following compounds

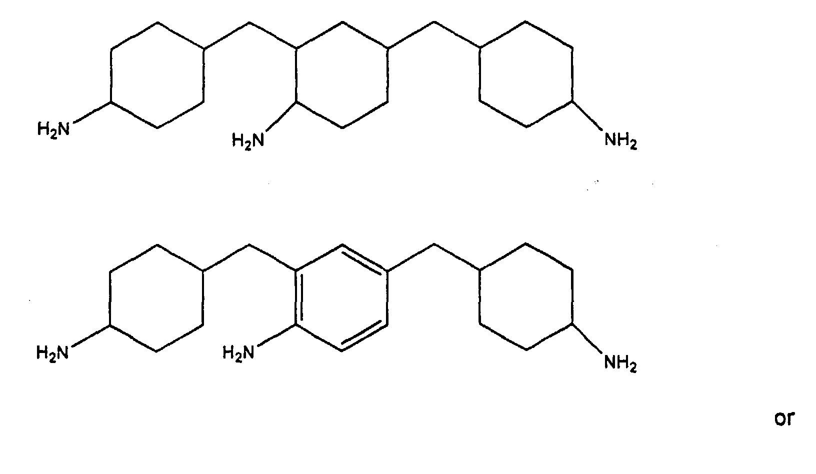

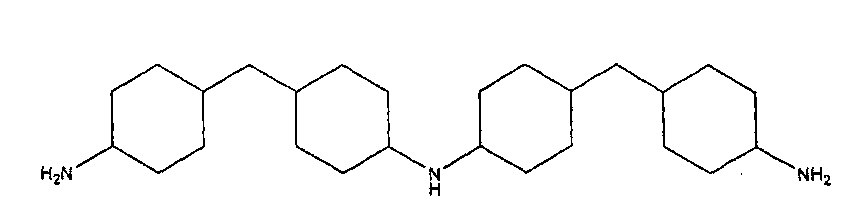

7. The method of Claim 6 in which the diester is a dimethyl or diethyl ester.

8. The method of Claim 1 in which the isocyanate reactive component also contains an amine resin, a polyhydroxyl compound, or both.

9. A spray polyurea elastomer made by reacting together at a temperature less than 100°C (a) a polyisocyanate prepolymer or semi-prepolymer component and (b) an isocyanate-reactive component containing at least one compound which is the reaction product of a diester of maleic acid or fumaric acid with a polyamine component, the polyamine component comprising a polyamine having 2 primary amino groups and at least one other functional group which is reactive towards isocyanate at temperatures of less than 100°C, the diester and polyamine component reacted in ratio of 0.1-0.9 moles of diester per equivalent of isocyanate reactive groups to afford a reaction product having at least 10 equivalent percent of free unreacted, isocyanate-reactive group, the functional isocyanate-reactive group being a primary aliphatic or aromatic amine, a secondary aliphatic or aromatic amine which is not an aspartic ester, or a primary, secondary, or tertiary alcohol, combining the components (a) and (b) through a spray gun.

10. The elastomer of Claim 9 in which the reaction product has 25-50 eq% of free isocyanate-reactive groups.

11. The elastomer of Claim 9 in which in which the reaction product comprises at least one polyaspartic acid derivative of the structure 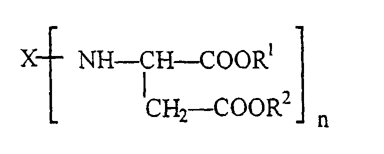 wherein X represents an organic group derived from a compound having n primary amino groups and containing at least one other functionality which is reactive towards isocyanate groups at a temperature of 100°C or less, R¹ and R² may be identical or different and represent C1-C4 alkyl groups, and n represents an integer with a value of at least 2.

12. The elastomer of Claim 9 in which the polyamine component comprises at least one of the following compounds

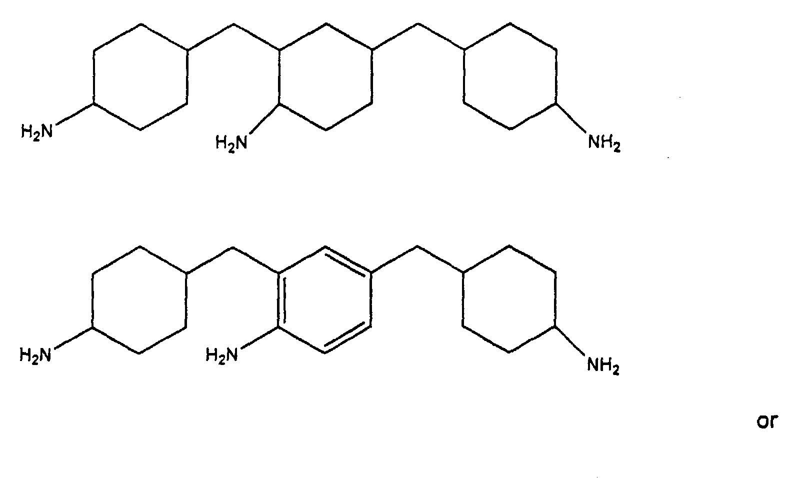

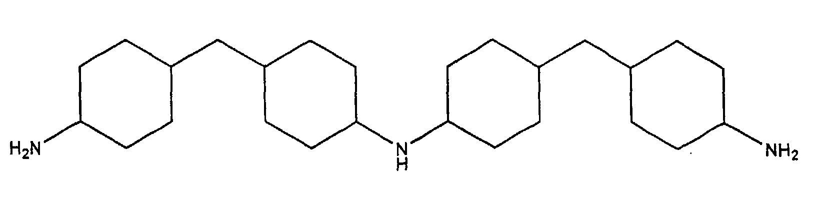

13. The elastomer of Claim 9 in which the isocyanate reactive component also contains an amine resin, a polyhydroxyl compound, or both.

14. The elastomer of Claim 10 in which in which the reaction product comprises at least one polyaspartic acid derivative of the structure 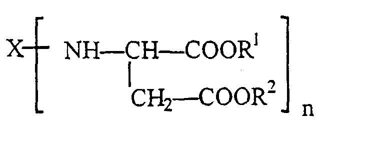 wherein X represents an organic group derived from a compound having n primary amino groups and containing at least one other functionality which is reactive towards isocyanate groups at a temperature of 100°C or less, R¹ and R² may be identical or different and represent methyl or ethyl groups, and n represents an integer with a value of 2 or 3.

15. The elastomer of Claim 14 in which the polyamine component comprises at least one of the following compounds

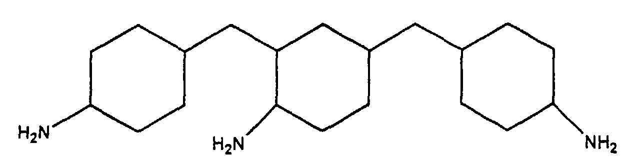

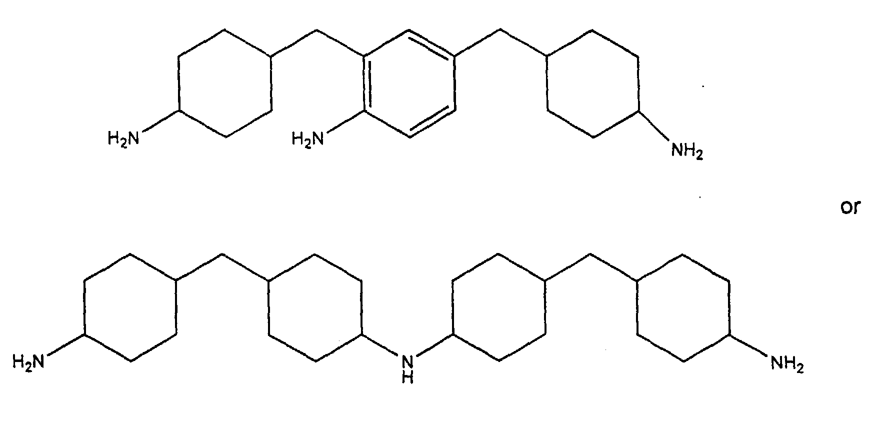

16. The elastomer of Claim 15 in which the isocyanate reactive component also contains an amine resin, a polyhydroxyl compound, or both.

17. An isocyanate-reactive composition containing at least one compound which is the reaction product of a diester of maleic acid or fumaric acid with a polyamine component, the polyamine component comprising a polyamine having 2 primary amino groups and at least one other functional group which is reactive towards isocyanate at temperatures of less than 100°C, the diester and polyamine component reacted in ratio of <1 mole of diester per equivalent of isocyanate reactive group to afford a reaction product having 10-90 eq% of free isocyanate-reactive group, the functional isocyanate-reactive group being a primary aliphatic or aromatic amine, a secondary aliphatic or aromatic amine which is not an aspartic ester, or a primary, secondary, or tertiary alcohol.

18. The composition of Claim 17 in which in which the reaction product comprises at least one polyaspartic acid derivative of the structure 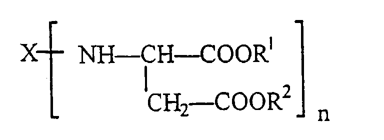 wherein X represents an organic group derived from a compound having n primary amino groups and containing at least one other functionality which is reactive towards isocyanate groups at a temperature of 100°C or less, R¹ and R² may be identical or different and represent methyl or ethyl groups, and n represents an integer with a value of 2 or 3.

19. The composition of Claim 18 in which the polyamine component comprises at least one of the following compounds

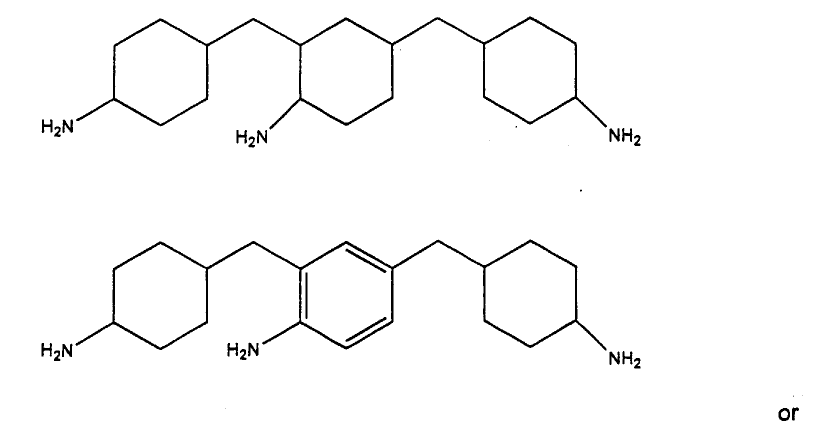

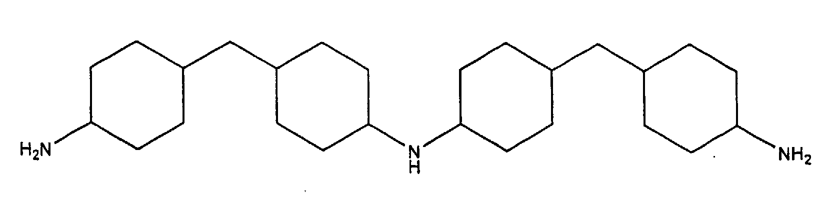

20. The composition of Claim 19 in which the isocyanate reactive component also contains an amine resin, a polyhydroxyl compound, or both.
